(19)

Europäisches
Patentamt
European
Patent Office
Office européen
des brevets

(11) **EP 4 769 365 A1**

(12) **EUROPEAN PATENT APPLICATION**

(43) Date of publication:
**01.07.2026 Bulletin 2026/27**

(21) Application number: **25220114.0**

(22) Date of filing: **02.12.2025**

(51) International Patent Classification (IPC):
**G08G 5/76** *(2025.01)*    **G08G 5/52** *(2025.01)*
**G08G 5/53** *(2025.01)*    **G08G 5/54** *(2025.01)*
**G08G 5/55** *(2025.01)*    **G01C 23/00** *(2006.01)*

(52) Cooperative Patent Classification (CPC):
**G08G 5/76;** G01C 23/00; G08G 5/52; G08G 5/53;
G08G 5/54; G08G 5/55

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.12.2024 US 202419005630**

(71) Applicant: **The Boeing Company
Arlington, VA 22202 (US)**

(72) Inventors:
• **KIM, Geun I.
ARLINGTON, 22202 (US)**
• **FREGANI, José AlexandreTavares Guerreiro
ARLINGTON, 22202 (US)**

(74) Representative: **Plasseraud IP
104 Rue de Richelieu
CS92104
75080 Paris Cedex 02 (FR)**

(54) **SYSTEM AND METHOD FOR HUMIDITY-BASED PERFORMANCE ADJUSTMENT IN AIRCRAFT FLIGHT MANAGEMENT SYSTEMS**

(57)    A method includes obtaining first humidity data indicative of a first humidity value at an origin airport of a flight. The method also includes obtaining second humidity data indicative of a second humidity value at a destination airport. The method also includes determining, based on the first humidity data, a first fuel flow rate adjustment for a first phase of flight from a first altitude of the origin airport to a threshold altitude. The method also includes determining, based on the second humidity data, a second fuel flow rate adjustment for a second phase of flight from the threshold altitude to a second altitude of the destination airport. The method also includes estimating total fuel flow for the flight based on the first fuel flow rate adjustment and the second fuel flow rate adjustment.

700

```
┌─────────────────────────────────────────────────┐
│ OBTAIN FIRST HUMIDITY DATA INDICATIVE OF A FIRST │
│ HUMIDITY VALUE AT AN ORIGIN AIRPORT OF A FLIGHT  │
│                      702                          │
└─────────────────────────────────────────────────┘
                        │
                        ▼
┌─────────────────────────────────────────────────┐
│ OBTAIN SECOND HUMIDITY DATA INDICATIVE OF A      │
│ SECOND HUMIDITY VALUE AT A DESTINATION AIRPORT   │
│                      704                          │
└─────────────────────────────────────────────────┘
                        │
                        ▼
┌─────────────────────────────────────────────────┐
│ DETERMINE, BASED ON THE FIRST HUMIDITY DATA, A   │
│ FIRST FUEL FLOW RATE ADJUSTMENT FOR A FIRST      │
│ PHASE OF FLIGHT FROM A FIRST ALTITUDE OF THE     │
│ ORIGIN AIRPORT TO A THRESHOLD ALTITUDE           │
│                      706                          │
└─────────────────────────────────────────────────┘
                        │
                        ▼
┌─────────────────────────────────────────────────┐
│ DETERMINE, BASED ON THE SECOND HUMIDITY DATA, A  │
│ SECOND FUEL FLOW RATE ADJUSTMENT FOR A SECOND    │
│ PHASE OF FLIGHT FROM THE THRESHOLD ALTITUDE TO A │
│ SECOND ALTITUDE OF THE DESTINATION AIRPORT       │
│                      708                          │
└─────────────────────────────────────────────────┘
                        │
                        ▼
┌─────────────────────────────────────────────────┐
│ ESTIMATE TOTAL FUEL FLOW FOR THE FLIGHT BASED ON │
│ THE FIRST FUEL FLOW RATE ADJUSTMENT AND THE      │
│ SECOND FUEL FLOW RATE ADJUSTMENT                 │
│                      710                          │
└─────────────────────────────────────────────────┘
```

**FIG. 7**

EP 4 769 365 A1

**Description**

## FIELD OF THE DISCLOSURE

The present disclosure relates generally to aircraft flight management systems, and more particularly, to systems and methods for adjusting aircraft performance calculations and fuel consumption predictions based on humidity data.

## BACKGROUND

Modern aircraft flight management systems (FMS) are sophisticated computer systems that provide aircraft navigation, flight planning, and performance optimization capabilities. While these systems account for various factors affecting aircraft performance, they currently lack the capability to adequately address the impact of humidity on engine performance, particularly during critical flight phases below 20,000 feet where humidity effects are most significant.

High humidity conditions significantly degrade aircraft engine performance in multiple ways. First, humid air contains water vapor that displaces oxygen molecules, resulting in reduced oxygen concentration per unit volume compared to dry air. This decreased oxygen content directly impacts the engine's combustion efficiency. Second, the lower density of humid air reduces the mass flow through the engine, further degrading engine performance. These effects manifest as reduced thrust output and increased fuel consumption to maintain required performance levels.

The impact of humidity is particularly pronounced during takeoff, climb, approach, landing, and go-around operations, where maximum engine performance is often required. During these critical phases, humidity-induced thrust reduction can affect various performance parameters including field length requirements, climb gradients, obstacle clearance capabilities, and approach climb limitations. The thrust reduction in humid conditions is analogous to a partial engine derating, though typically of smaller magnitude.

Existing FMS solutions employ general drag and fuel flow factors to account for overall performance degradation, such as airframe deterioration and engine blade wear. However, these factors are applied uniformly throughout the flight profile and cannot be adjusted for specific humidity conditions at departure and arrival airports. This limitation results in potentially inaccurate fuel consumption predictions, which can lead to insufficient fuel loading during preflight planning. The consequences of such inaccuracies include unplanned fuel stops, flight diversions, and reduced payload capacity to accommodate additional contingency fuel. Therefore, there is a need for an improved flight management system that can specifically account for humidity-induced performance degradation, particularly during critical flight phases below 20,000 feet, to enable more accurate fuel consumption predictions and performance calculations.

## SUMMARY

The present disclosure provides a method as defined by independent claim 1, an aircraft as defined by independent claim 8 and a line replacement unit as defined by independent claim 12. Preferred embodiments are defined in the appended dependent claims.

The method includes obtaining first humidity data indicative of a first humidity value at an origin airport of a flight. The method also includes obtaining second humidity data indicative of a second humidity value at a destination airport. The method also includes determining, based on the first humidity data, a first fuel flow rate adjustment for a first phase of flight from a first altitude of the origin airport to a threshold altitude. The method also includes determining, based on the second humidity data, a second fuel flow rate adjustment for a second phase of flight from the threshold altitude to a second altitude of the destination airport. The method also includes estimating total fuel flow for the flight based on the first fuel flow rate adjustment and the second fuel flow rate adjustment.

The aircraft includes one or more engines and a flight management system (FMS). The FMS is configured to obtain first humidity data indicative of a first humidity value at an origin airport of a flight. The FMS is also configured to obtain second humidity data indicative of a second humidity value at a destination airport. The FMS is also configured to determine, based on the first humidity data, a first fuel flow rate adjustment of the one or more engines for a first phase of flight from a first altitude of the origin airport to a threshold altitude. The FMS is also configured to determine, based on the second humidity data, a second fuel flow rate adjustment of the one or more engines for a second phase of flight from the threshold altitude to a second altitude of the destination airport. The FMS is also configured to estimate total fuel flow of the one or more engines for the flight based on the first fuel flow rate adjustment and the second fuel flow rate adjustment.

The line replaceable unit (LRU) includes one or more processors configured to obtain first humidity data indicative of a first humidity value at an origin airport of a flight. The one or more processors are also configured to obtain second humidity data indicative of a second humidity value at a destination airport. The one or more processors are also configured to determine, based on the first humidity data, a first fuel flow rate adjustment for a first phase of flight from a first altitude of the origin airport to a threshold altitude. The one or more processors are also configured to determine, based on the second humidity data, a second fuel flow rate adjustment for a second phase of flight from the threshold altitude to a second altitude of the destination airport. The one or more processors are also configured to estimate total fuel flow for the flight based on the first fuel flow rate adjustment and the second fuel flow rate adjustment.

The features, functions, and advantages described herein can be achieved independently in various implementations or may be combined in yet other implementations, further details of which can be found with reference to the following description and drawings.

## BRIEF DESCRIPTION OF THE DRAWINGS

FIG. 1 is a diagram that illustrates a top view representation of an aircraft showing a location for a flight management system and a particular implementation of the flight management system.

FIG. 2 is a diagram that illustrates a particular implementation of the flight management system.

FIG. 3 illustrates an example of a control display unit (CDU) configured to display information related to takeoff performance.

FIG. 4 illustrates an example of a CDU configured to display information related to an aircraft's approach and landing.

FIG. 5 illustrates an example of a CDU configured to display information about a currently selected flight route.

FIG. 6 illustrates an example of a CDU configured to display additional information about a currently selected flight route.

FIG. 7 is a flow chart of a method of use of a flight management system.

FIG. 8 is a flowchart illustrating an example of a life cycle of an aircraft that includes a flight management system of FIG. 1.

FIG. 9 is a block diagram illustrating aspects of an illustrative aircraft that includes a flight management system of FIG. 1.

FIG. 10 is a diagram of electronic components of a flight management system.

## DETAILED DESCRIPTION

Aspects disclosed herein present systems and methods for improving aircraft fuel consumption predictions by accounting for humidity effects on engine performance. These aspects address the challenge of operating aircraft in humid environments by providing a flight management system that automatically adjusts performance calculations based on humidity conditions at both departure and arrival airports.

The system obtains humidity information, specifically compute from outside air and dew point temperatures, for both the departure and arrival airports. This information can be entered manually by pilots through the aircraft's control display unit or received automatically through weather data uplinks from ground stations. The system then uses this humidity data to calculate how much the engine's performance will be affected during different phases of flight, particularly during takeoff, climb, approach, and landing operations below 20,000 feet where humidity has the greatest impact. For example, in highly humid conditions, the system might determine that the engine will produce slightly less thrust and consume more fuel than it would in dry conditions. These calculations result in two key adjustments: first, a more accurate prediction of how much fuel the aircraft will need for the flight, and second, an adjustment to the aircraft's maximum allowable takeoff weight to ensure safe operation.

The system applies these humidity-based adjustments differently for different parts of the flight. During takeoff and initial climb, it uses the departure airport's humidity data. During approach and landing, it uses the arrival airport's humidity data. This segmented approach ensures that performance adjustments accurately reflect the actual conditions the aircraft will encounter throughout its journey.

By using the techniques and systems described herein, several advantages are realized over existing solutions. The system enhances flight safety by ensuring more accurate fuel loading before departure. It improves operational efficiency by reducing the likelihood of unnecessary fuel stops or diversions due to inaccurate fuel predictions. The system also helps optimize aircraft performance by providing pilots with more precise information about engine thrust capabilities in humid conditions. All of these benefits are achieved through an automated process that requires minimal additional pilot workload, as the system seamlessly integrates with existing flight management procedures.

The system streamlines flight planning by eliminating the need for pilots to make manual calculations or consult additional charts to account for humidity effects. It provides clear, easy-to-understand information through the aircraft's existing display systems, showing pilots both the calculated adjustments and the resulting impact on fuel requirements and aircraft performance. This integration into standard flight deck procedures helps ensure that humidity effects are consistently and accurately accounted for in every flight, regardless of weather conditions or route.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

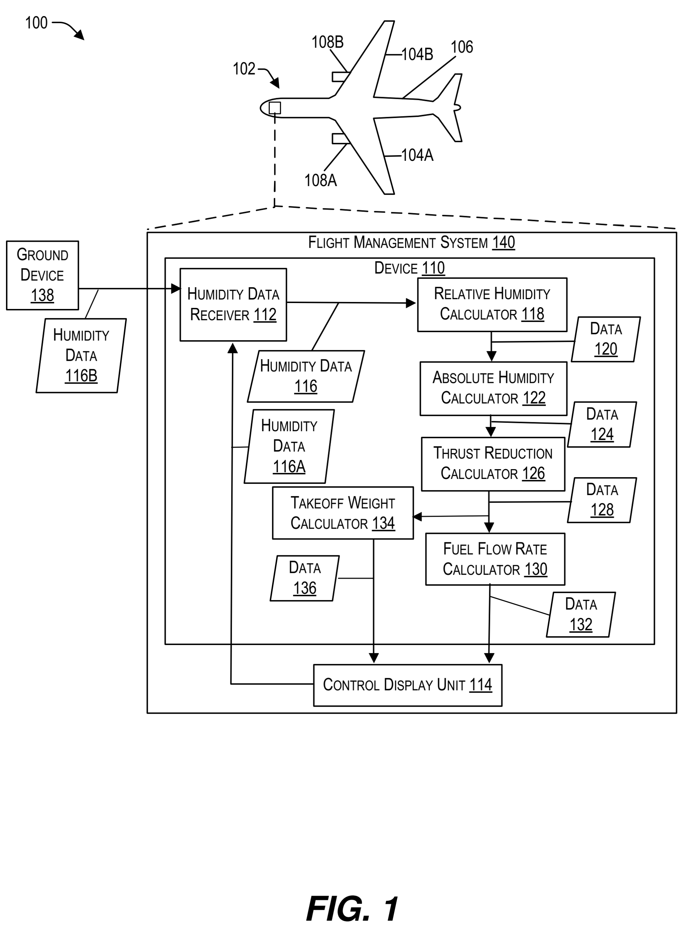

Particular implementations are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to FIG. 1, multiple humidity data 116 are illustrated and associated with the reference numbers 116A and 116B. When referring to a particular one of these humidity data 116, such as humidity data 116A, the distinguishing letter "A" is used. However, when referring to any arbitrary one of these humidity data, the reference number 116 is used without a distinguishing letter.

As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. For ease of reference herein, such features are generally introduced as "one or more" features and are subsequently referred to in the singular or optional plural (as typically indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

FIG. 1 depicts an example 100 of an aircraft 102 that has wings 104A, 104B coupled to a fuselage 106. An engine 108 is coupled to each of the wings 104, via an engine pylon or strut, and the engine 108 is enclosed inside of a nacelle. The aircraft 102 can include a flight management system (FMS) 140. The FMS 140 can include a device 110. The device 110 can be a line replaceable unit (LRU), a tablet, a smart phone, a computer-based tool, a laptop computer, or an input accessory device.

The device 110 includes a humidity data receiver 112 that is configured to receive humidity data 116 either as humidity data 116A from a control display unit (CDU) 114 or as humidity data 116B from a ground device 138. In some implementations, the humidity data receiver 112 is configured to obtain first humidity data indicative of a first humidity value at an origin airport of a flight and second humidity data indicative of a second humidity value at a destination airport. The humidity data 116A is inputted by a user through the CDU 114 and can include humidity values for the origin airport, the destination airport, or both airports. The humidity data 116B is automatically uplinked from the ground device 138 and can include humidity values for the origin airport, the destination airport, or both airports. In some aspects, the humidity data 116 includes a dew point temperature and an outside air temperature (OAT) for each airport.

The device 110, the humidity data receiver 112, or a relative humidity calculator 118, or any combination thereof, is configured to perform a reasonableness check on the humidity data 116. The reasonableness check determines whether the first and second humidity values are within reasonable ranges for their respective airports. In some implementations, when the reasonableness check determines that one or more humidity values are not reasonable, the FMS 140 or the device 110 causes the CDU 114 to display an indication that the humidity values are not reasonable and requests the user to input new humidity data 116A or initiate a new uplink for humidity data 116B.

The relative humidity calculator 118 is configured to determine a relative humidity based on the humidity data 116 and generate data 120 indicative of the calculated relative humidity. The relative humidity calculator 118 determines the relative humidity (RH) according to:

$$RH = (e^{(17.625Dp/(243.04+Dp))})/(e^{(17.625T/(243.04+T))}) \times 100 \; [\%]$$

where:

T is the OAT in degrees Celsius (°C)

Dp is the dew point temperature in degrees Celsius (°C)

For example, with a dew point temperature of 26°C and an OAT of 28°C, the relative humidity calculator 118 may determine a relative humidity of 88.9%.

The device 110 includes an absolute humidity calculator 122 configured to receive the data 120 from the relative humidity calculator 118 and determine an absolute humidity. The absolute humidity calculator 122 generates data 124 indicative of the calculated absolute humidity. The absolute humidity calculator 122 determines the absolute humidity (H) according to:

$$H = (6.112e^{(17.67T/(T+273.15))} * (RH/2.1674))/(273.15+T) \; [g/m^3]$$

where:

T is the OAT in degres Celsius (°C)

RH is the relative humidity in percentage (%)

For example, using the previously calculated relative humidity of 88.9% and an OAT of 28°C, the absolute humidity calculator 122 may determine an absolute humidity of 0.242 g/m$^3$.

The device 110 includes a thrust reduction calculator 126 configured to receive the data 124 from the absolute humidity calculator 122 and determine a thrust decrease value. The thrust reduction calculator 126 generates data 128 indicative of the calculated thrust decrease and sends the data 128 to both the fuel flow rate calculator 130 and the takeoff weight calculator 134. The thrust reduction calculator 126 determines a thrust decrease coefficient (CT) according to:

$$CT = 1 - 0.0826H - 0.0021H^2$$

where:
H is the absolute humidity in g/m$^3$

For example, with an absolute humidity of 0.242 g/m$^3$, the thrust reduction calculator 126 may determine a thrust decrease of 2.0% (CT = 0.980).

The device 110 includes a fuel flow rate calculator 130 configured to receive the data 128 from the thrust reduction calculator 126 and determine fuel flow rate adjustments. The fuel flow rate calculator 130 generates data 132 indicative of the estimated total fuel flow of the one or more engines 108 for the flight based on a first fuel flow rate adjustment and a second fuel flow rate adjustment. The fuel flow rate calculator 130 determines a fuel flow increase coefficient (CF) according to:

$$CF = 1 + 0.4882H + 0.3828H^2$$

where:

H is the absolute humidity in $g/m^3$

For example, with an absolute humidity of 0.242 $g/m^3$, the fuel flow rate calculator 130 may determine a fuel flow increase of 14.1% (CF = 1.141).

In some implementations, the fuel flow rate calculator 130 determines a fuel flow rate for the cruise phase of flight, which occurs above the threshold altitude of 20,000 feet. The cruise phase fuel flow rate is determined using standard atmospheric models and engine performance characteristics at cruise altitude. The total fuel flow estimate generated by the fuel flow rate calculator 130 as data 132 comprises the first fuel flow rate adjustment for the climb phase below the threshold altitude, the cruise phase fuel flow rate, and the second fuel flow rate adjustment for the descent phase below the threshold altitude.

The device 110 includes the takeoff weight calculator 134 that is configured to receive the data 128 from the thrust reduction calculator 126 and determine a takeoff weight penalty. The takeoff weight calculator 134 generates data 136 indicative of an allowable takeoff weight of the aircraft 102. In some implementations, the takeoff weight calculator 134 determines the takeoff weight penalty based on the thrust decrease value and aircraft performance characteristics including wing reference area, wingspan, aspect ratio, velocity, air density, and drag coefficients. For example, with a thrust decrease of 2.0%, the takeoff weight calculator 134 may determine a takeoff weight penalty of -1,674 kg.

During operation, the humidity data receiver 112 obtains first humidity data 116 for an origin airport and second humidity data 116 for a destination airport, either through manual input via the CDU 114 or automatically from the ground device 138. After passing the reasonableness check, the relative humidity calculator 118 processes the humidity data 116 to determine relative humidity values, which are then converted to absolute humidity values by the absolute humidity calculator 122. The thrust reduction calculator 126 uses the absolute humidity values to determine thrust decrease factors for both the origin and destination airports. These thrust decrease values are used by the fuel flow rate calculator 130 to determine fuel flow rate adjustments for different phases of flight-specifically from the origin airport altitude to a threshold altitude (i.e., 20,000 feet) and from the threshold altitude to the destination airport altitude. The takeoff weight calculator 134 uses the thrust decrease values to determine any necessary takeoff weight penalties.

Once the total fuel flow estimate is determined based on the first fuel flow rate adjustment and the second fuel flow rate adjustment, the FMS 140 or the device 110 applies the fuel flow increase to the appropriate flight phases. In some implementations, the FMS 140 or the device 110 transmits data 132 and data 136 to ground personnel through the CDU 114, where the data 132 indicates the appropriate amount of fuel needed for the flight and the data 136 indicates the allowable takeoff weight based on the calculated adjustments and penalties. This information enables ground personnel to properly prepare the aircraft 102 for flight while accounting for humidity effects on engine performance.

By using the techniques and systems described herein, the FMS 140 has the technical advantages of providing accurate, real-time adjustments to aircraft performance calculations based on humidity conditions at both origin and destination airports. The integration of humidity data 116 into the FMS 140 offers a significant improvement over existing systems by automatically accounting for humidity-induced thrust reduction and increased fuel consumption. This capability reduces the risk of insufficient fuel loading and prevents unexpected performance limitations during critical flight phases such as takeoff, climb, and go-around operations.

Furthermore, the FMS 140 provides enhanced operational efficiency through its automated reasonableness checks and systematic calculation of performance adjustments. The FMS's 140 ability to receive the humidity data 116 either through manual input from the CDU 114 or automatic uplink from ground device 138, combined with its comprehensive processing of this data through multiple specialized calculators, ensures consistent and reliable performance predictions. This systematic approach eliminates the need for pilots to perform complex manual calculations or rely on conservative estimations, potentially reducing operational costs while maintaining safety margins.

The FMS 140 also offers the technical advantage of precise weight management through real-time calculation of takeoff weight penalties. By accurately determining the impact of humidity on engine thrust and subsequent aircraft performance capabilities, the FMS 140 enables operators to maximize payload while ensuring safe operation. The ability to automatically communicate fuel requirements and weight limitations to ground personnel further streamlines ground operations and reduces the potential for human error in flight planning calculations.

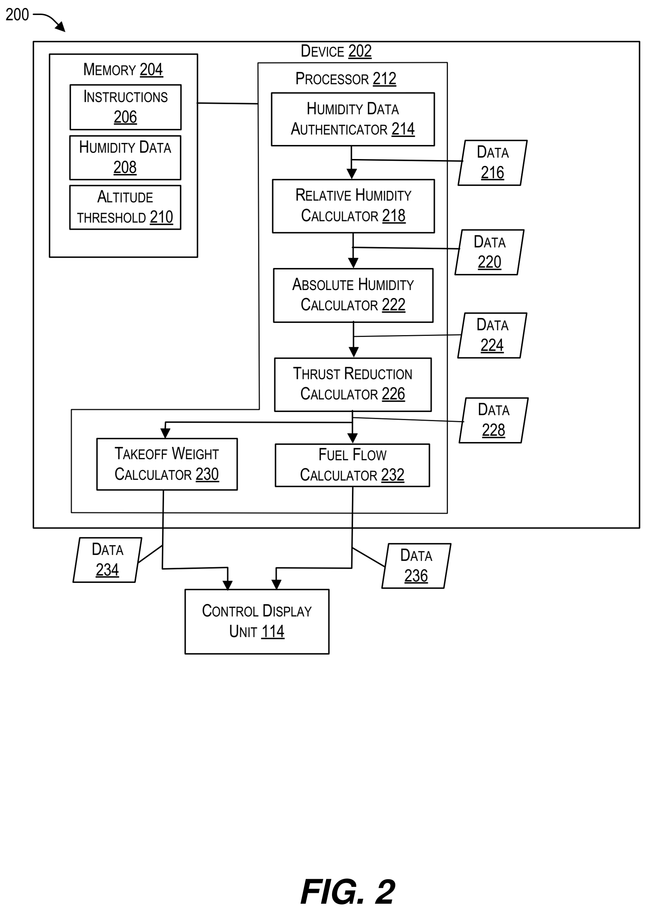

FIG. 2 is a diagram that illustrates a particular implementation of the flight management system 200 that includes a device 202. The device 202 can be implemented as the device 110 described in FIG. 1. The device 202 includes a memory 204 and a processor 212. The memory 204 stores instructions 206, humidity data 208, and an altitude threshold 210. In some implementations, the altitude threshold 210 is approximately 20,000 feet, representing the boundary between flight phases where humidity effects are most significant and where they become negligible.

The processor 212 includes a humidity data authenticator 214 that is configured to receive the humidity data 208 from the memory 204. The humidity data authenticator 214 performs a reasonableness check on the humidity data 208, which includes first humidity data indicative of a first humidity value at an origin airport and second humidity data indicative of a second humidity value at a destination airport. The humidity data authenticator 214 generates data 216 indicative of authenticated humidity data when the reasonableness check confirms the humidity values are within acceptable ranges for their respective airports.

The processor 212 includes a relative humidity calculator 218 configured to receive the data 216 from the humidity data authenticator 214. The relative humidity calculator 218 determines relative humidity values for both the origin and destination airports based on their respective dew point temperatures and OATs included in the humidity data 208. The relative humidity calculator 218 is configured to calculate relative humidity according to the relative humidity formula described in FIG. 1. The relative humidity calculator 218 generates data 220 indicative of the calculated relative humidity values.

An absolute humidity calculator 222 of the processor 212 receives the data 220 from the relative humidity calculator 218. The absolute humidity calculator 222 converts the relative humidity values into absolute humidity values for both airports using the absolute humidity formula described in FIG. 1. The absolute humidity calculator 222 generates data 224 indicative of the calculated absolute humidity values.

The processor 212 includes a thrust reduction calculator 226 configured to receive the data 224 from the absolute humidity calculator 222. The thrust reduction calculator 226 determines thrust decrease values for both airports based on their respective absolute humidity values using the thrust decrease coefficient formula described in FIG. 1. The thrust reduction calculator 226 generates data 228 indicative of the calculated thrust decrease values. The data 228 is provided to both a fuel flow rate calculator 232 and a takeoff weight calculator 230.

The fuel flow rate calculator 232 receives the data 228 from the thrust reduction calculator 226 and determines fuel flow rate adjustments for different phases of flight using the fuel flow increase coefficient formula described in FIG. 1. Specifically, the fuel flow rate calculator 232 determines a first fuel flow rate adjustment for a first phase of flight from a first altitude of the origin airport to the altitude threshold 210, and a second fuel flow rate adjustment for a second phase of flight from the altitude threshold 210 to a second altitude of the destination airport. The fuel flow rate calculator 232 generates data 236 indicative of the estimated total fuel flow for the flight based on the first and second fuel flow rate adjustments.

The takeoff weight calculator 230 receives the data 228 from the thrust reduction calculator 226 and determines a takeoff weight penalty that represents a decrease to an allowable takeoff weight of the aircraft. The takeoff weight calculator 230 generates data 234 indicative of the determined takeoff weight penalty based on the thrust decrease value and aircraft performance characteristics including wing reference area, wingspan, aspect ratio, velocity, air density, and drag coefficients.

Both the data 236 from the fuel flow rate calculator 232 and the data 234 from the takeoff weight calculator 230 are transmitted to the CDU 114. The CDU 114 displays the fuel flow information and takeoff weight penalty to the pilot and enables pilot input confirming the displayed information.

During operation, the device 202 processes humidity data 208 obtained either through manual input via the CDU114 or automatically uplinked from a ground station, as described in relation to FIG. 1. The humidity data authenticator 214 performs the reasonableness check on the humidity data 208. Upon authentication, the relative humidity calculator 218 processes the data 216 to determine relative humidity values, which are then converted to absolute humidity values by the absolute humidity calculator 222. The thrust reduction calculator 226 uses the data 224 containing the absolute humidity values to determine thrust decrease factors. The thrust reduction calculator 226 sends data 228 to both the fuel flow rate calculator 232 and the takeoff weight calculator 230. The fuel flow rate calculator 232 determines the fuel flow rate adjustments for different phases of flight based on the altitude threshold 210, while the takeoff weight calculator 230 determines any necessary takeoff weight penalties. The CDU 114 receives and displays both the data 236 containing fuel flow information and the data 234 containing takeoff weight penalties.

By using the techniques and systems described herein, the device 202 has the technical advantages of providing modular and efficient processing of humidity-based performance calculations through its specialized calculator architecture. The segmentation of calculations between distinct calculators (218, 222, 226, 232, 230) enables independent validation, testing, and updating of individual calculation components without affecting the entire system. This modularity significantly reduces software maintenance complexity and allows for rapid deployment of calculation improvements while maintaining system reliability.

Furthermore, the device 202 provides enhanced computational efficiency through its optimized data flow architecture. The direct communication paths between calculators, combined with the dual-output configuration of the thrust reduction calculator 226, ensures consistent and reliable performance predictions. This architectural efficiency eliminates processing bottlenecks and enables real-time performance updates during critical flight planning phases, reducing operational delays while maintaining safety margins.

The device 202 also offers the technical advantage of robust data integrity through its integrated authentication and threshold management capabilities. The inclusion of the humidity data authenticator 214 within the processor 212, combined with the configurable altitude threshold 210 stored in memory 204, enables operators to maximize performance benefits while maintaining required safety margins. This systematic approach to data validation and processing ensures accurate performance predictions while providing the flexibility to adapt to different aircraft types and operating requirements without requiring software modifications.

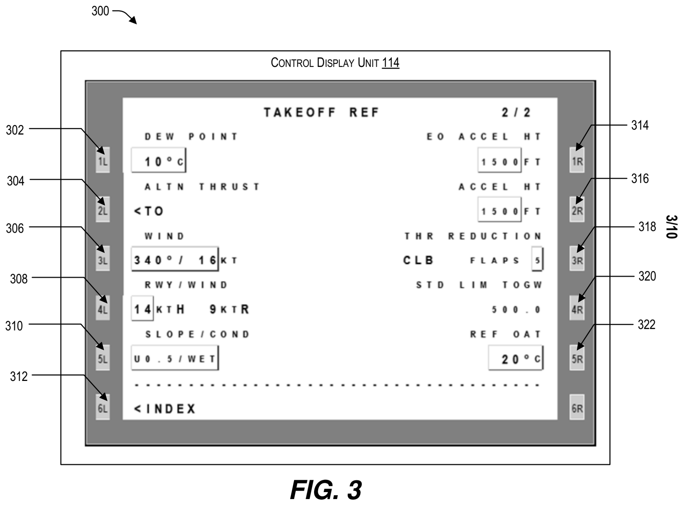

FIG. 3 illustrates an example 300 of the CDU 114 configured to display information related to takeoff performance. For example, the CDU 114 illustrated in FIG. 3 shows a TAKEOFF REF page 2/2 that includes multiple line select keys on both the left side (302-312) and right side (314-322) of the CDU 114, with corresponding display fields between them.

On the left side of the CDU 114, a first line select key 302 corresponds to a DEW POINT field that displays a dew point temperature of 10°C. This dew point temperature can be either manually entered by a user through the CDU 114 or automatically uplinked from the ground device 138, as described in relation to FIG. 1. The dew point temperature is used by the relative humidity calculator 118 to determine the relative humidity value according to the formula described in relation to FIG. 1.

A second line select key 304 corresponds to an ALTN THRUST field displaying "<TO", indicating an alternate thrust setting for takeoff operations. Below this, a third line select key 306 corresponds to a WIND field showing wind information of "340°/16KT", representing wind direction and speed data that may be received through the ground device 138 or manually inputted by a user through the CDU 114.

A fourth line select key 308 is associated with an RWY/WIND field displaying "14KTH 9KTR", providing runway and wind component information. Adjacent to this, a fifth line select key 310 corresponds to a SLOPE/COND field showing "U0.5/WET", indicating runway slope and condition data that can be used for takeoff performance calculations.

At the bottom left, of the CDU 114 is a sixth line select key 312 displaying "<INDEX", providing access to additional CDU menus and functions.

On the right side of the CDU 114, line select keys 314 and 316 correspond to acceleration height fields. The EO ACCEL HT field at line select key 314 displays "1500FT" for engine-out acceleration height, while the ACCEL HT field at line select key 316 also shows "1500FT" for normal acceleration height. These heights are calculated based on various performance parameters including the humidity-based thrust reduction determined by the thrust reduction calculator 126.

A thrust reduction field corresponds to line select key 318, showing "THR REDUCTION" with "CLB FLAPS 5" indicating climb flap settings. This thrust reduction takes into account the humidity effects calculated using the thrust decrease coefficient (CT) formula described in relation to FIG. 1.

Line select key 320 corresponds to a STD LIM TOGW field displaying "500.0", representing the standard maximum takeoff gross weight. This limit may be adjusted based on the takeoff weight penalty calculated by the takeoff weight calculator 134 using the thrust decrease values and aircraft performance characteristics, as described in FIGS. 1 and 2.

Line select key 322 is associated with a REF OAT field showing an outside air temperature of "20°C". Similar to the dew point temperature, this value can be manually entered or automatically uplinked and is used in conjunction with the dew point temperature to calculate relative humidity, as described in FIG. 1.

The CDU 114 display interface provides users with direct access to input and verify humidity-related parameters that affect aircraft performance calculations. The displayed values and calculated values are used by the FMS 140 to determine appropriate thrust settings, acceleration heights, and takeoff weights while accounting for humidity effects on engine performance. This integration of humidity data into the takeoff reference display enables more accurate performance predictions and safer flight operations in various atmospheric conditions.

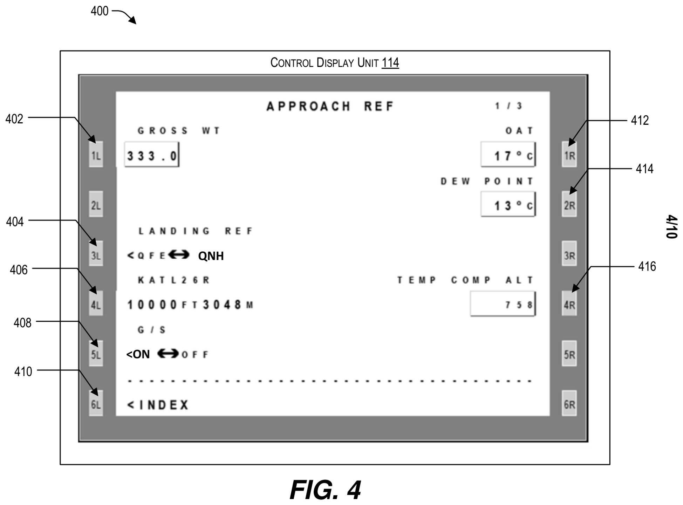

FIG. 4 illustrates an example 400 of the CDU 114 configured to display information related to approach and landing performance. For example, the CDU 114 illustrated in FIG. 4 is showing an APPROACH REF page 1/3 that includes multiple line select keys on both the left side (402-410) and right side (412-416) of the CDU 114, with corresponding display fields between them.

On the left side of the CDU 114, line select key 402 displays "333.0" in the GROSS WT field, representing the aircraft's current gross weight. This weight value is continuously calculated by the FMS 140 based on initial weight and fuel burn throughout the flight.

Line select key 404 corresponds to a LANDING REF field showing "<QFE↔QNH", allowing pilots to select between QFE (height above airport elevation) and QNH (height above sea level) altimeter settings. These settings allow for proper altitude referencing during the approach and landing phases.

Line select key 406 displays "KATL26R 10000FT 3048M", providing destination airport information including the airport identifier, runway designation, and runway elevation/length in both imperial and metric units. This information is typically accessed from the FMS navigation database and is used for approach and landing calculations.

A G/S field corresponds to line select key 408, showing "<ON↔OFF" which allows users to enable or disable the glide slope guidance system during approach operations.

At the bottom left of the CDU 114, line select key 410 displays "<INDEX", providing access to additional CDU menus and functions.

On the right side of the CDU 114, line select key 412 corresponds to an OAT field showing "17°C", indicating the current outside air temperature. This temperature value is used in conjunction with the dew point temperature to calculate relative humidity, as described in relation to FIG. 1.

Line select key 414 corresponds to a DEW POINT field displaying "13°C". Similar to the dew point temperature described in FIG. 3, this value can be manually entered or automatically uplinked and is used by the relative humidity calculator 118 to determine the relative humidity value according to the formula described in relation to FIG. 1.

Line select key 416 is associated with a TEMP COMP ALT field showing "758", representing the temperature compensated altitude. This value is calculated based on various atmospheric parameters including the humidity effects determined by the calculations described in FIG. 1.

The CDU 114 display interface provides users with direct access to input and verify humidity-related parameters (i.e., humidity data 116) that affect aircraft performance calculations during approach and landing phases. The displayed values and calculated parameters are used by the FMS 140 to determine appropriate thrust settings and approach speeds while accounting for humidity effects on engine performance. This integration of humidity data 116 into the approach reference display enables more accurate performance predictions and safer flight operations in various atmospheric conditions.

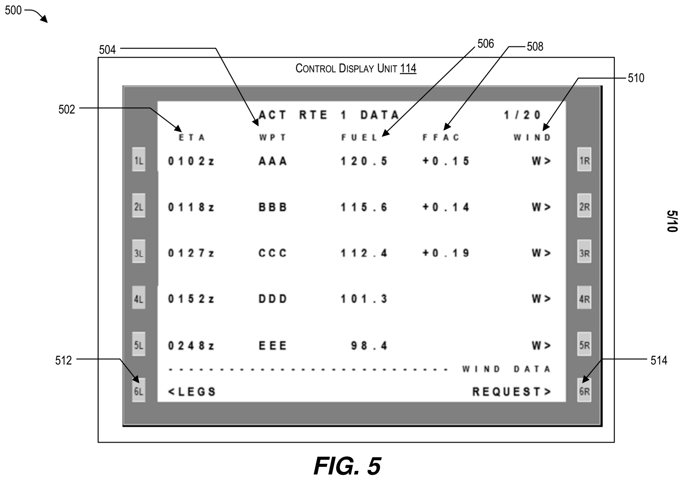

FIG. 5 illustrates an example 500 of the CDU 114 configured to display active route data and fuel flow adjustment information. The CDU 114 shows an ACT RTE 1 DATA page 1/20 that includes multiple columns of information and line select keys arranged to present flight plan data, fuel predictions, and humidity-based fuel flow adjustments.

The CDU 114 display includes several information columns. A first column 502 shows Estimated Time of Arrival (ETA) values for each waypoint, displayed in Zulu time format (e.g., "0102z", "0118z", "0127z", "0152z", and "0248z"). Adjacent to the first column 502, a second column 504 displays Waypoint (WPT) identifiers, represented as three-letter codes (e.g., "AAA", "BBB", "CCC", "DDD", and "EEE") that identify specific navigation points along the flight route.

A third column 506 presents predicted FUEL quantities, showing the estimated fuel remaining at each waypoint in thousands of pounds (e.g., "120.5", "115.6", "112.4", "101.3", and "98.4"). This fuel prediction incorporates various factors including the humidity-based fuel flow adjustments calculated by the system.

A fourth column 508 displays Fuel Flow Adjustment Coefficients (FFAC). These values (e.g., "+0.15", "+0.14", "+0.19") represent the fuel flow adjustment factors calculated by the fuel flow rate calculator 130 based on the humidity data 116. The positive values indicate increased fuel consumption due to humidity effects on engine performance. The FFAC values are specifically applied to flight segments below the threshold altitude of 20,000 feet, where humidity effects are most significant.

In some implementations, the FFAC fields shown in the fourth column 508 indicate where fuel flow adjustments are applied during different phases of flight. For waypoints at cruise altitude (above 20,000 feet), the fuel flow rate calculator 130 determines the cruise phase fuel flow rate based on the aircraft's cruise performance characteristics. The total fuel predictions shown in the third column 506 are calculated by combining the cruise phase fuel flow rate with the adjusted fuel flow rates determined for flight segments below the threshold altitude during climb and descent phases.

A fifth column 510 shows WIND information, indicated by "W>" symbols, which can be selected to view detailed wind predictions for each waypoint. This wind data is used in conjunction with the humidity-based calculations, as described in FIGS. 1 and 2, to provide comprehensive performance predictions.

The CDU 114 interface includes multiple line select keys on both the left side (1L through 6L) and right side (1R through 6R) of the display. At the bottom of the CDU 114 display, a left selection option 512 labeled "<LEGS" allows access to detailed flight plan leg information. On the right side, a right selection option 514 labeled "REQUEST>" enables users to request additional wind data for specific waypoints.

During operation, the CDU 114 continuously updates the displayed information based on real-time calculations from the FMS 140. The FFAC values reflect the humidity-based fuel flow adjustments that have been calculated using the dew point temperatures and outside air temperatures from both the origin and destination airports, as described in FIGS. 1 and 2. These adjustments ensure more accurate fuel predictions by accounting for the increased fuel consumption that occurs in humid conditions.

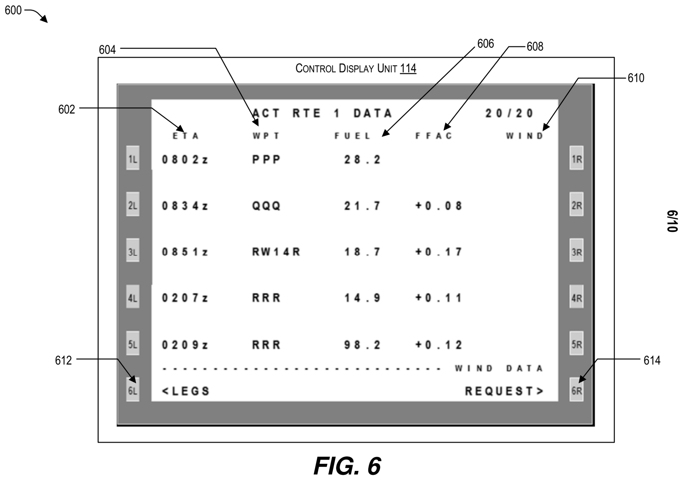

FIG. 6 illustrates an example 600 of the CDU 114 configured to display active route data and fuel flow adjustment information specifically for the arrival and approach phase of flight. The CDU 114 shows an ACT RTE 1 DATA page 20/20, representing the final page of the route data, which includes multiple columns of information and line select keys arranged to present terminal arrival and approach information.

The CDU 114 display includes a first column 602 that shows Estimated Time of Arrival (ETA) values for each terminal waypoint, displayed in Zulu time format (e.g., "0802z", "0834z", "0851z", "0207z", and "0209z").

Adjacent to the first column 602, a second column 604 displays Waypoint (WPT) identifiers with special significance for the arrival phase. Waypoint "RW14R" represents the destination runway, indicating Runway 14 Right. This is preceded by waypoints "PPP" and "QQQ" which typically represent arrival fixes or approach waypoints, and followed by "RRR" which may represent missed approach waypoints.

A third column 606 presents predicted FUEL quantities, showing the estimated fuel remaining at each waypoint in thousands of pounds (e.g., "28.2", "21.7", "18.7", "14.9", and "98.2"). The decreasing values through the approach sequence, followed by the higher value at the last waypoint, suggest planning for potential missed approach and holding fuel requirements.

The fourth column 608 displays Fuel Flow Adjustment Coefficients (FFAC) that are important for the arrival phase. These values (e.g., "+0.08", "+0.17", "+0.11", "+0.12") represent the fuel flow adjustment factors calculated by the fuel flow rate calculator 130 based on the destination airport's humidity conditions (i.e., humidity data 116).

A fifth column 610 provides space for WIND information, though specific wind data is not shown in this example. This information can be accessed through the "REQUEST>" option 614 at the bottom right of the CDU 114 display.

The CDU 114 display includes the standard line select keys on both the left side (1L through 6L) and right side (1R through 6R). At the bottom of the display, a left selection option 612 labeled "<LEGS" allows access to detailed flight plan leg information.

During operation, this final page of the route data display shows the terminal phase of flight where humidity effects on engine performance may be considered. The FFAC values displayed here reflect the humidity-based fuel flow adjustments calculated using the destination airport's dew point temperature and outside air temperature, as entered or uplinked via a ground device 138, as described in FIG. 1.

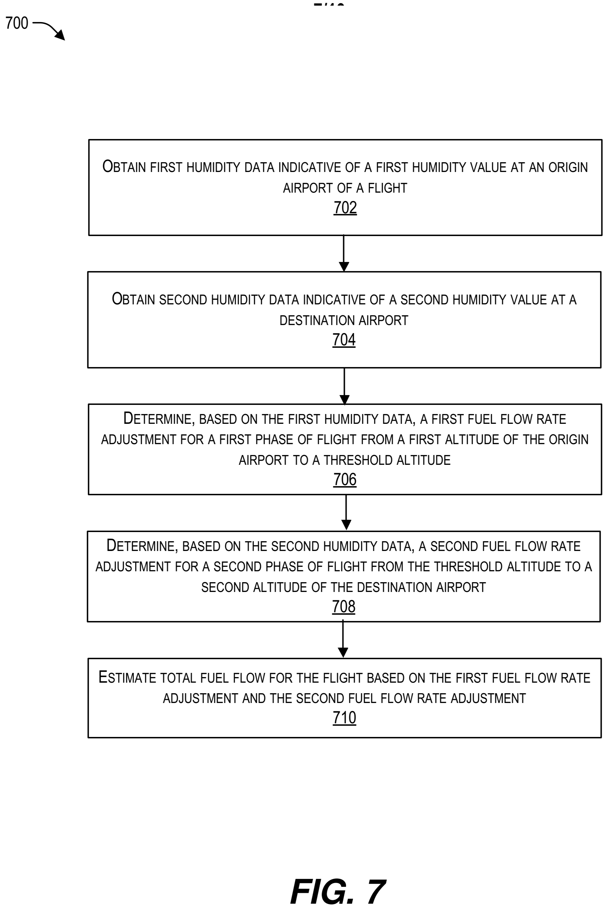

FIG. 7 is a flow chart of a method 700 of use of the FMS 140. The method 700 is performable using any of the FMSs 140, devices 110, 202, or CDUs 114 of FIGS. 1-6. The method 700 includes, at block 702, obtaining first humidity data indicative of a first humidity value at an origin airport of a flight. For example, the humidity data receiver 112 receives humidity data 116A through manual input via the CDU 114, where a user enters a dew point temperature of 10°C and an outside air temperature of 28°C for the origin airport. In another example, the humidity data receiver 112 receives humidity data 116B automatically uplinked from the ground device 138 containing the dew point temperature and outside air temperature for the origin airport.

The method 700 includes, at block 704, obtaining second humidity data indicative of a second humidity value at a destination airport. For example, the humidity data receiver 112 receives humidity data 116A through manual input via the CDU 114, where a user enters a dew point temperature of 13°C and an outside air temperature of 17°C for the destination airport. In another example, the humidity data receiver 112 receives humidity data 116B automatically uplinked from the ground device 138 containing the destination airport's dew point temperature and outside air temperature.

The method 700 includes, at block 706, determining, based on the first humidity data, a first fuel flow rate adjustment for a first phase of flight from a first altitude of the origin airport to a threshold altitude. For example, the relative humidity calculator 118 processes the origin airport humidity data 116 to determine a relative humidity of 88.9% using the dew point and OAT values. The absolute humidity calculator 122 then converts this to an absolute humidity of 0.242 g/m$^3$. Using this absolute humidity value, the thrust reduction calculator 126 determines a thrust decrease of 2.0% (CT = 0.980). Based on this thrust decrease, the fuel flow rate calculator 130 determines a fuel flow increase coefficient of 14.1% (CF = 1.141) for the flight phase from takeoff to the threshold altitude of 20,000 feet.

The method 700 includes, at block 708, determining, based on the second humidity data, a second fuel flow rate adjustment for a second phase of flight from the threshold altitude to a second altitude of the destination airport. For example, the relative humidity calculator 118 processes the destination airport humidity data 116 and calculates a relative humidity value using the entered dew point of 13°C and OAT of 17°C. The absolute humidity calculator 122 converts this to an absolute humidity value, which the thrust reduction calculator 126 uses to determine a thrust decrease value. The fuel flow rate calculator 130 then determines a fuel flow increase coefficient for the flight phase from the threshold altitude of 20,000 feet down to the destination airport altitude.

The method 700 includes, at block 710, estimating total fuel flow for the flight based on the first fuel flow rate adjustment and the second fuel flow rate adjustment. For example, the fuel flow rate calculator 130 generates data 132 indicative of the estimated total fuel flow by applying the first fuel flow rate adjustment to all flight segments below 20,000 feet during the climb phase and the second fuel flow rate adjustment to all flight segments below 20,000 feet during the descent, approach, and landing phases. The FMS 140 or device 110 then transmits this data 132 to ground personnel through the CDU 114, indicating the appropriate amount of fuel needed for the flight based on these humidity-adjusted calculations.

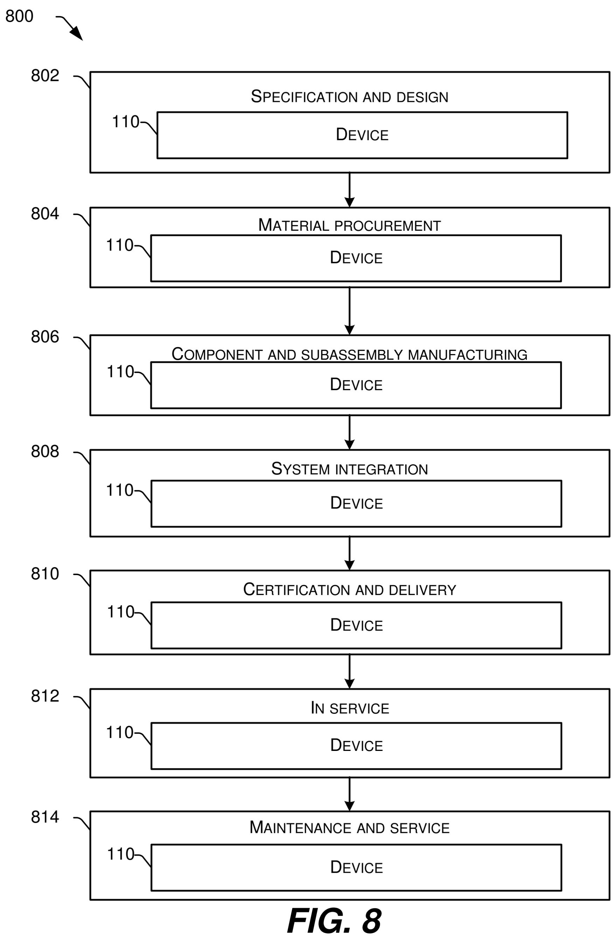

FIG. 8 is a flowchart illustrating an example 800 of a life cycle of an aircraft that includes the device 110 of FIG. 1. During pre-production, the exemplary method 800 includes, at block 802, specification and design of the aircraft. During specification and design of the aircraft, the method 800 may include specification and design of the device 110 and locations where the device 110 are to be placed. At block 804, the method 800 includes material procurement, which may include procuring materials for the device 110 or procuring pre-assembled device 110.

During production, the method 800 includes, at block 806, component and subassembly manufacturing and, at block 808, system integration of the aircraft. For example, the method 800 may include component and subassembly manufacturing of the device 110, system integration of the device 110 with the aircraft, or both. At block 810, the method 800 includes certification and delivery of the aircraft and, at block 812, placing the aircraft in service. Certification and delivery may include certification of the device 110 to place the device 110 in service. While in service by a customer, the aircraft may be scheduled for routine maintenance and service (which may also include modification, reconfiguration, refurbishment, and so on). At block 814, the method 800 includes performing maintenance and service on the aircraft, which may include performing maintenance and service on the device 110. For example, the maintenance and service can include replacing one or more computer components included in the device 110.

Each of the processes of the method 800 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

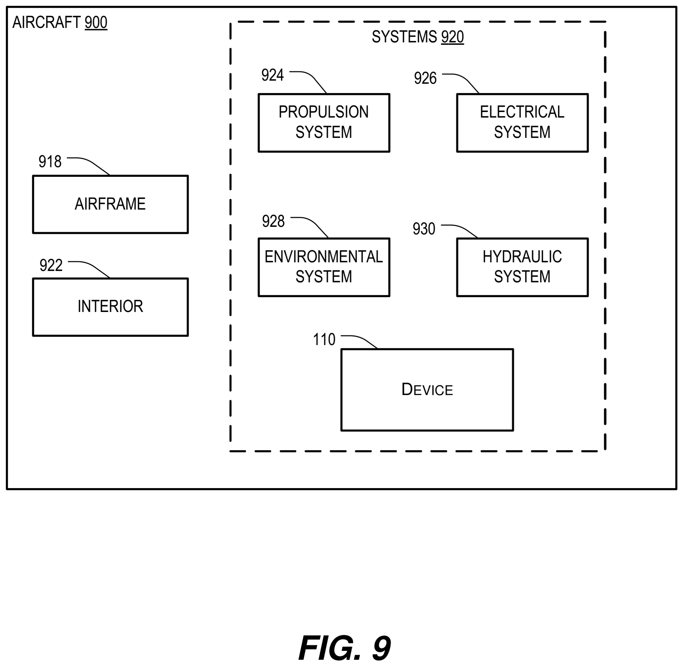

Aspects of the disclosure can be described in the context of an example of an aircraft 900 as shown in FIG. 9. In the example of FIG. 9, the aircraft 900 includes an airframe 918 with a plurality of systems 920 and an interior 922 Examples of the plurality of systems 920 include one or more of a propulsion system 924, an electrical system 926, an environmental system 928, a hydraulic system 930, and the device 110. Any number of other systems may be included. In the example of FIG. 9, the aircraft 900 includes the device 110 in accordance with one or more aspects of the disclosure as described in FIGS. 1-7. Portions of the device 110 are included in the airframe 918 and the interior 922.

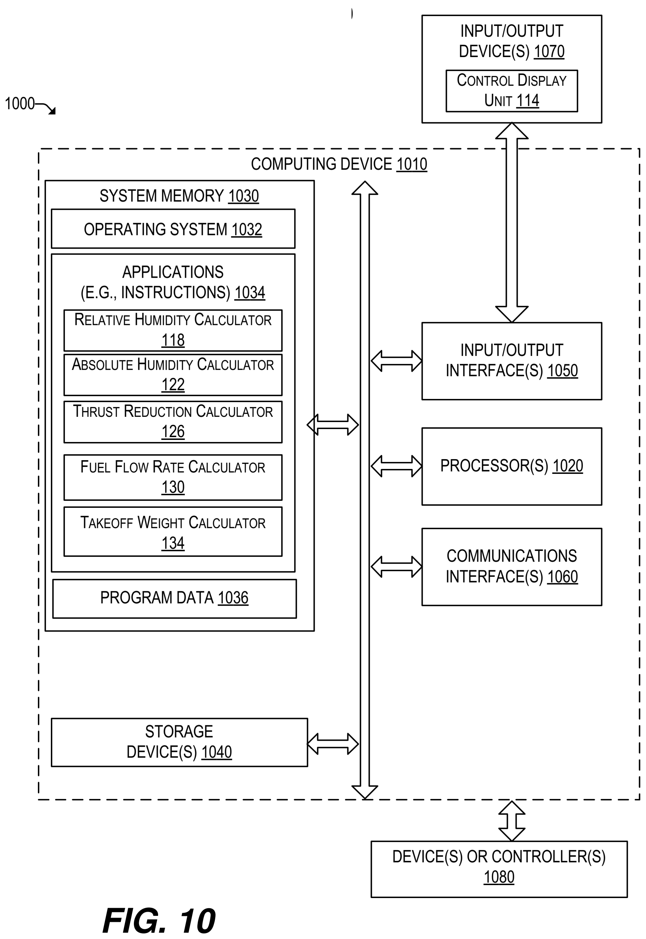

FIG. 10 is a block diagram of a computing environment 1000 including a computing device 1010 configured to support aspects of computer-implemented methods and computer-executable program instructions (or code) according to the present disclosure. For example, the computing device 1010, or portions thereof, is configured to execute instructions to initiate, perform, or control one or more operations described with reference to FIGS. 1-7.

The computing device 1010 includes one or more processors 1020. The processor(s) 1020 are configured to communicate with system memory 1030, one or more storage devices 1040, one or more input/output interfaces 1050, one or more communications interfaces 1060, or any combination thereof. The system memory 1030 includes volatile memory devices (e.g., random access memory (RAM) devices), nonvolatile memory devices (e.g., read-only memory (ROM) devices, programmable read-only memory, and flash memory), or both. The system memory 1030 stores an operating system 1032, which may include a basic input/output system for booting the computing device 1010 as well as a full operating system to enable the computing device 1010 to interact with users, other programs, and other devices. The system memory 1030 stores system (program) data 1036.

The system memory 1030 includes one or more applications 1034 (e.g., sets of instructions) executable by the processor(s) 1020. As an example, the one or more applications 1034 include instructions executable by the processor(s) 1020 to initiate, control, or perform one or more operations described with reference to the relative humidity calculator 118, the absolute humidity calculator 122, the thrust reduction calculator 126, the fuel flow rate calculator 130, the takeoff weight calculator 134, or a combination thereof , in FIGS. 1-7.

In a particular implementation, the system memory 1030 includes a non-transitory, computer-readable medium storing the instructions that, when executed by the processor(s) 1020, cause the processor(s) 1020 to initiate, perform, or control operations to aid in adjusting aircraft performance calculations and fuel consumption predictions based on humidity data

. The operations includes obtaining first humidity data indicative of a first humidity value at an origin airport of a flight; obtaining second humidity data indicative of a second humidity value at a destination airport; determining, based on the first humidity data, a first fuel flow rate adjustment for a first phase of flight from a first altitude of the origin airport to a threshold altitude; determining, based on the second humidity data, a second fuel flow rate adjustment for a second phase of flight from the threshold altitude to a second altitude of the destination airport; and estimating total fuel flow for the flight based on the first fuel flow rate adjustment and the second fuel flow rate adjustment.

The one or more storage devices 1040 include nonvolatile storage devices, such as magnetic disks, optical disks, or flash memory devices. In a particular example, the storage devices 1040 include both removable and non-removable memory devices. The storage devices 1040 are configured to store an operating system, images of operating systems, applications (e.g., one or more of the applications 1034), and program data (e.g., the program data 1036). In a particular aspect, the system memory 1030, the storage devices 1040, or both, include tangible computer-readable media. In a particular aspect, one or more of the storage devices 1040 are external to the computing device 1010.

The one or more input/output interfaces 1050 enable the computing device 1010 to communicate with one or more input/output devices 1070, such as the CDU 114, to facilitate user interaction. For example, the one or more input/output interfaces 1050 can include a display interface, an input interface, or both. For example, the input/output interface 1050 is adapted to receive input from a user, to receive input from another computing device, or a combination thereof. In some implementations, the input/output interface 1050 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device 1070 includes one or more user interface devices and displays, including some combination of buttons, keyboards, pointing devices, displays, speakers, microphones, touch screens, and other devices.

The processor(s) 1020 are configured to communicate with devices or controllers 1080 via the one or more communications interfaces 1060. For example, the one or more communications interfaces 1060 can include a network interface.

In some implementations, a non-transitory, computer-readable medium stores instructions that, when executed by one or more processors, cause the one or more processors to initiate, perform, or control operations to perform part or all of the functionality described above. For example, the instructions may be executable to implement one or more of the operations or methods of FIGS. 1-7. In some implementations, part, or all of one or more of the operations or methods of FIGS. 1-7 may be implemented by one or more processors (e.g., one or more central processing units (CPUs), one or more graphics processing units (GPUs), one or more digital signal processors (DSPs)) executing instructions, by dedicated hardware circuitry, or any combination thereof.

Particular aspects of the disclosure are described below in sets of interrelated Examples:

According to Example 1, a method includes obtaining first humidity data indicative of a first humidity value at an origin airport of a flight; obtaining second humidity data indicative of a second humidity value at a destination airport; determining, based on the first humidity data, a first fuel flow rate adjustment for a first phase of flight from a first altitude of the origin airport to a threshold altitude; determining, based on the second humidity data, a second fuel flow rate adjustment for a second phase of flight from the threshold altitude to a second altitude of the destination airport; and estimating total fuel flow for the flight based on the first fuel flow rate adjustment and the second fuel flow rate adjustment.

Example 2 includes the method of Example 1, further comprising determining a fuel flow rate for a cruise phase of flight, wherein the total fuel flow for the flight is further based on the fuel flow rate for the cruise phase of flight.

Example 3 includes the method of Example 1 or Example 2, wherein said obtaining first humidity data, said obtaining second humidity data, or both, includes receiving input through a control display unit (CDU).

Example 4 includes the method of any of Examples 1 to 3, wherein said obtaining first humidity data, said obtaining second humidity data, or both, includes receiving weather data uplinked from a weather service or ground station.

Example 5 includes the method of any of Examples 1 to 4, wherein the first humidity data, the second humidity data, or both, includes a dew point temperature and an outside air temperature.

Example 6 includes the method of any of Examples 1 to 5, wherein said determining the first fuel flow rate adjustment comprises determining a first relative humidity based on the first humidity data; determining a first absolute humidity based on the first relative humidity; and determining a first thrust decrease value based on the first absolute humidity, wherein the first fuel flow rate adjustment is determined based on at least the first thrust decrease value.

Example 7 includes the method of Example 6, further includes displaying the determined first thrust decrease value to a pilot via a CDU; and adjusting one or more takeoff parameters of an aircraft based on the determined first thrust decrease value.

Example 8 includes the method of any of Examples 1 to 7, further includes displaying fuel flow information, based on the estimated total fuel flow, to a pilot via a CDU; and receiving, via the CDU, a pilot input confirming the displayed fuel flow information.

Example 9 includes the method of any of Examples 1 to 8, further includes determining a takeoff weight penalty for an aircraft based on at least the first humidity data, wherein the takeoff weight penalty represents a decrease to an allowable takeoff weight of the aircraft.

According to Example 10, an aircraft includes one or more engines; and a flight management system (FMS) configured to obtain first humidity data indicative of a first humidity value at an origin airport of a flight; obtain second humidity data indicative of a second humidity value at a destination airport; determine, based on the first humidity data, a first fuel flow rate adjustment of the one or more engines for a first phase of flight from a first altitude of the origin airport to a threshold altitude; determine, based on the second humidity data, a second fuel flow rate adjustment of the one or more engines for a second phase of flight from the threshold altitude to a second altitude of the destination airport; and estimate total fuel flow of the one or more engines for the flight based on the first fuel flow rate adjustment and the second fuel flow rate adjustment.

Example 11 includes the aircraft of Example 10, further comprising a control data unit (CDU) coupled to the FMS, wherein the CDU is configured to display the estimated total fuel flow of the one or more engines.

Example 12 includes the aircraft of Example 10 or Example 11, wherein the FMS is further configured to determine a fuel flow rate for a cruise phase of flight, and wherein the total fuel flow for the flight is further based on the fuel flow rate for the cruise phase of flight.

Example 13 includes the aircraft of any of Examples 10 to 12, wherein the FMS is configured to receive the first humidity data, the second humidity data, or both, as input received via a CDU.

Example 14 includes the aircraft of any of Examples 10 to 13, wherein the FMS is configured to receive the first humidity data, the second humidity data, or both, via weather data uplinked from a weather service or ground station.

Example 15 includes the aircraft of any of Examples 10 to 14, wherein the FMS is further configured to determine a takeoff weight penalty for the aircraft based on at least the first humidity data, wherein the takeoff weight penalty represents a decrease to an allowable takeoff weight of the aircraft; and cause a CDU to display the determined takeoff weight penalty.

Example 16 includes the aircraft of any of Examples 10 to 15, wherein the threshold altitude is approximately 20,000 feet.

According to Example 17, a line replaceable unit (LRU) includes one or more processors configured to obtain first humidity data indicative of a first humidity value at an origin airport of a flight; obtain second humidity data indicative of a second humidity value at a destination airport; determine, based on the first humidity data, a first fuel flow rate adjustment for a first phase of flight from a first altitude of the origin airport to a threshold altitude; determine, based on the second humidity data, a second fuel flow rate adjustment for a second phase of flight from the threshold altitude to a second altitude of the destination airport; and estimate total fuel flow for the flight based on the first fuel flow rate adjustment and the second fuel flow rate adjustment.

Example 18 includes the LRU of Example 17, wherein the one or more processors are further configured to determine a takeoff weight penalty for an aircraft based on at least the first humidity data, and wherein the takeoff weight penalty represents a decrease to an allowable takeoff weight of the aircraft.

Example 19 includes the LRU of Example 17 or Example 18, wherein the one or more processors are further configured to determine a fuel flow rate for a cruise phase of flight, and wherein the total fuel flow for the flight is further based on the fuel flow rate for the cruise phase of flight.

Example 20 includes the LRU of any of Examples 17 to 19, wherein the one or more processors are further configured to receive the first humidity data, the second humidity data, or both, via weather data uplinked from a weather service or ground station.

The illustrations of the examples described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims and their equivalents.

**Claims**

1. A method (700) comprising:

    obtaining (702) first humidity data (116) indicative of a first humidity value at an origin airport of a flight;
    obtaining (704) second humidity data (116) indicative of a second humidity value at a destination airport;
    determining (706), based on the first humidity data, a first fuel flow rate adjustment (132, 508) for a first phase of flight from a first altitude of the origin airport (504) to a threshold altitude (210);
    determining (708), based on the second humidity data, a second fuel flow rate adjustment (132, 608) for a second phase of flight from the threshold altitude to a second altitude of the destination airport (604); and
    estimating (710) total fuel flow (132) for the flight based on the first fuel flow rate adjustment and the second fuel flow rate adjustment.

2. The method of claim 1, further comprising determining a fuel flow rate for a cruise phase of flight, wherein the total fuel flow for the flight is further based on the fuel flow rate for the cruise phase of flight.

3. The method of claim 1 or 2, wherein said obtaining first humidity data, said obtaining second humidity data, or both, includes receiving weather data (166B) uplinked from a weather service or ground station (138).

4. The method of any one of claims 1 to 3, wherein the first humidity data, the second humidity data, or both, includes a dew point temperature (302) and an outside air temperature (322).

5. The method of any one of claims 1 to 4, wherein said determining the first fuel flow rate adjustment comprises:

   determining a first relative humidity (120) based on the first humidity data;
   determining a first absolute humidity (124) based on the first relative humidity; and
   determining a first thrust decrease value (128) based on the first absolute humidity, wherein the first fuel flow rate adjustment is determined based on at least the first thrust decrease value.

6. The method of claim 5, further comprising:

   displaying the determined first thrust decrease value to a pilot via a CDU; and
   adjusting one or more takeoff parameters of an aircraft based on the determined first thrust decrease value.

7. The method of any one of claims 1 to 6, further comprising determining a takeoff weight penalty (136) for an aircraft based on at least the first humidity data, wherein the takeoff weight penalty represents a decrease to an allowable takeoff weight of the aircraft.

8. An aircraft (102) comprising:

   one or more engines (108); and
   a flight management system, 'FMS ', (140) configured to:

      obtain first humidity data (116) indicative of a first humidity value at an origin airport (504) of a flight;
      obtain second humidity data (116) indicative of a second humidity value at a destination airport (604);
      determine, based on the first humidity data, a first fuel flow rate adjustment (132, 508) of the one or more engines for a first phase of flight from a first altitude of the origin airport to a threshold altitude (210);
      determine, based on the second humidity data, a second fuel flow rate adjustment (132, 608) of the one or more engines for a second phase of flight from the threshold altitude to a second altitude of the destination airport; and
      estimate total fuel flow (132) of the one or more engines for the flight based on the first fuel flow rate adjustment and the second fuel flow rate adjustment.

9. The aircraft of claim 8, wherein the FMS is further configured to determine a fuel flow rate for a cruise phase of flight, and wherein the total fuel flow for the flight is further based on the fuel flow rate for the cruise phase of flight.

10. The aircraft of claim 8 or 9, further comprising a control data control data unit, 'CDU', (114) coupled to the FMS, wherein the FMS is configured to receive the first humidity data, the second humidity data, or both, as input (116A) received via the CDU.

11. The aircraft of claim 8 or 9, wherein the FMS is configured to receive the first humidity data, the second humidity data, or both, via weather data uplinked from a weather service or ground station.

12. A line replaceable unit, 'LRU ', (110) comprising:
    one or more processors (212) configured to:

       obtain first humidity data (116) indicative of a first humidity value at an origin airport (504) of a flight;
       obtain second humidity data (116) indicative of a second humidity value at a destination airport (604);
       determine, based on the first humidity data, a first fuel flow rate adjustment (132, 508) for a first phase of flight from a first altitude of the origin airport to a threshold altitude;
       determine, based on the second humidity data, a second fuel flow rate adjustment (132, 608) for a second phase of flight from the threshold altitude to a second altitude of the destination airport; and
       estimate total fuel flow (132) for the flight based on the first fuel flow rate adjustment and the second fuel flow rate adjustment.

13. The LRU of claim 12, wherein the one or more processors are further configured to determine a takeoff weight penalty (136) for an aircraft based on at least the first humidity data, and wherein the takeoff weight penalty represents a

**EP 4 769 365 A1**

decrease to an allowable takeoff weight of the aircraft.

14. The LRU of claim 12 or 13, wherein the one or more processors are further configured to determine a fuel flow rate for a cruise phase of flight, and wherein the total fuel flow for the flight is further based on the fuel flow rate for the cruise phase of flight.

15. The LRU of any one of claims 12 to 14, wherein the one or more processors are further configured to receive the first humidity data, the second humidity data, or both, via weather data (116B) uplinked from a weather service or ground station.

**15**

**FIG. 1**

**FIG. 2**

**FIG. 3**

EP 4 769 365 A1

CONTROL DISPLAY UNIT 114

**APPROACH REF**    1 / 3

GROSS WT    OAT

402 — 1L    333.0    17°C    1R — 412

414

2L    DEW POINT    2R — 414
13°C

404 — LANDING REF
3L    <QFE⟷QNH    3R

406 — KATL26R    TEMP COMP ALT    416
4L    10000FT3048M    758    4R

408 — G/S
5L    <ON⟷OFF    5R

410 — · · · · · · · · · · · · · · · · · · · · ·
6L    <INDEX    6R

4/10

**FIG. 4**

19

FIG. 5

FIG. 6

700 ⟍

```
┌─────────────────────────────────────────────────────────────────────┐
│  OBTAIN FIRST HUMIDITY DATA INDICATIVE OF A FIRST HUMIDITY VALUE AT   │
│                   AN ORIGIN AIRPORT OF A FLIGHT                       │
│                                702                                    │
└─────────────────────────────────────────────────────────────────────┘
                                   │
                                   ▼
┌─────────────────────────────────────────────────────────────────────┐
│  OBTAIN SECOND HUMIDITY DATA INDICATIVE OF A SECOND HUMIDITY VALUE    │
│                    AT A DESTINATION AIRPORT                           │
│                                704                                    │
└─────────────────────────────────────────────────────────────────────┘
                                   │
                                   ▼
┌─────────────────────────────────────────────────────────────────────┐
│  DETERMINE, BASED ON THE FIRST HUMIDITY DATA, A FIRST FUEL FLOW RATE  │
│  ADJUSTMENT FOR A FIRST PHASE OF FLIGHT FROM A FIRST ALTITUDE OF THE  │
│           ORIGIN AIRPORT TO A THRESHOLD ALTITUDE                      │
│                                706                                    │
└─────────────────────────────────────────────────────────────────────┘
                                   │
                                   ▼
┌─────────────────────────────────────────────────────────────────────┐
│  DETERMINE, BASED ON THE SECOND HUMIDITY DATA, A SECOND FUEL FLOW     │
│  RATE ADJUSTMENT FOR A SECOND PHASE OF FLIGHT FROM THE THRESHOLD      │
│       ALTITUDE TO A SECOND ALTITUDE OF THE DESTINATION AIRPORT        │
│                                708                                    │
└─────────────────────────────────────────────────────────────────────┘
                                   │
                                   ▼
┌─────────────────────────────────────────────────────────────────────┐
│  ESTIMATE TOTAL FUEL FLOW FOR THE FLIGHT BASED ON THE FIRST FUEL      │
│  FLOW RATE ADJUSTMENT AND THE SECOND FUEL FLOW RATE ADJUSTMENT        │
│                                710                                    │
└─────────────────────────────────────────────────────────────────────┘
```

*FIG. 7*

800

| 802 | SPECIFICATION AND DESIGN |
|---|---|
| | 110 — DEVICE |

↓

| 804 | MATERIAL PROCUREMENT |
|---|---|
| | 110 — DEVICE |

↓

| 806 | COMPONENT AND SUBASSEMBLY MANUFACTURING |
|---|---|
| | 110 — DEVICE |

↓

| 808 | SYSTEM INTEGRATION |
|---|---|
| | 110 — DEVICE |

↓

| 810 | CERTIFICATION AND DELIVERY |
|---|---|
| | 110 — DEVICE |

↓

| 812 | IN SERVICE |
|---|---|
| | 110 — DEVICE |

↓

| 814 | MAINTENANCE AND SERVICE |
|---|---|
| | 110 — DEVICE |

*FIG. 8*

AIRCRAFT 900

SYSTEMS 920

918

AIRFRAME

922

INTERIOR

924

PROPULSION SYSTEM

926

ELECTRICAL SYSTEM

928

ENVIRONMENTAL SYSTEM

930

HYDRAULIC SYSTEM

110

DEVICE

*FIG. 9*

1000 ⟍

**COMPUTING DEVICE 1010**

**SYSTEM MEMORY 1030**

**OPERATING SYSTEM 1032**

**APPLICATIONS (E.G., INSTRUCTIONS) 1034**

RELATIVE HUMIDITY CALCULATOR 118

ABSOLUTE HUMIDITY CALCULATOR 122

THRUST REDUCTION CALCULATOR 126

FUEL FLOW RATE CALCULATOR 130

TAKEOFF WEIGHT CALCULATOR 134

**PROGRAM DATA 1036**

**STORAGE DEVICE(S) 1040**

**INPUT/OUTPUT DEVICE(S) 1070**

CONTROL DISPLAY UNIT 114

**INPUT/OUTPUT INTERFACE(S) 1050**

**PROCESSOR(S) 1020**

**COMMUNICATIONS INTERFACE(S) 1060**

**DEVICE(S) OR CONTROLLER(S) 1080**

## FIG. 10

# EUROPEAN SEARCH REPORT

Europäisches
Patentamt
European
Patent Office
Office européen
des brevets

**Application Number**

EP 25 22 0114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Aircraft Performance" In: "Pilot's Handbook of Aeronautical Knowledge", 1 January 2023 (2023-01-01), Federal Aviation Administration, XP093382507, pages 11-1, Retrieved from the Internet: URL:https://www.faa.gov/sites/faa.gov/files/13_phak_ch11.pdf> * the whole document * ----- | 1-15 | INV. G08G5/76 ADD. G08G5/52 G08G5/53 G08G5/54 G08G5/55 G01C23/00 |
| T | GUINN THOMAS ET AL: "Quantifying the Effects of Humidity on Density Altitude Calculations for Professional Aviation Education", INTERNATIONAL JOURNAL OF AVIATION, AERONAUTICS, AND AEROSPACE, 1 January 2016 (2016-01-01), XP093382487, ISSN: 2374-6793, DOI: 10.15394/ijaaa.2016.1124 * the whole document * ----- | 1-15 | |

**TECHNICAL FIELDS SEARCHED (IPC)**

G08G
G01C

The present search report has been drawn up for all claims

| Place of search | Date of completion of the search | Examiner |
|---|---|---|
| The Hague | 27 March 2026 | Hanigk, Sebastian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................................
& : member of the same patent family, corresponding
document

EPO FORM 1503 03.82 (P04C01)